# EUROPEAN PATENT SPECIFICATION

(11) **EP 0 524 779 B1**
(45) Date of publication and mention of the grant of the patent: **01.03.1995**
(21) Application number: 92306567.6
(22) Date of filing: 17.07.1992
(51) Int. Cl.: A01F 15/07, B65B 11/00, B65G 13/075

(54) **Modified bale wrapping machine**
Ballenwickelvorrichtung
Dispositif pour emballer des balles

(30) Priority: 18.07.1991 GB 9115576
(43) Date of publication of application: 27.01.1993
(73) Proprietor: Anderson, Winton David, Turriff, Aberdeenshire, AB5 7RY, Scotland (GB)
(72) Inventor: Anderson, Winton David, Turriff, Aberdeenshire, AB5 7RY, Scotland (GB)
(74) Representative: Ede, Eric

(56) References cited:
- FR-A- 2 346 248
- GB-A- 2 192 172
- US-A- 4 383 598
- US-A- 5 012 631

## Description

This invention relates to a bale wrapping machine.

In GB 2 192 172 A there is disclosed a bale wrapping machine comprising a wheeled base frame having a bale receiving cradle followed by a bale-wrapping device and a roller bed sloping down to ground level, the bale receiving cradle comprising a support along which a bale can be translated into the bale wrapping device and a hydraulic ram device for translating the bale along the support, the bale wrapping device being located at a gap between the support and the roller bed and comprising a hoop arrangement through which bales can be translated by the hydraulic ram device, the hoop arrangement including a fixed hoop, a rotary hoop rotatable coaxially with the fixed hoop, a reel for plastics strip carried by the rotary hoop and drive means for the rotary hoop.

In some situations it has been found that bales have fallen into the gap during the initial bale loading process. Furthermore, when the support comprises a further and shorter roller bed as yet unwrapped bales of long stemmed grass such as Alfalfa grass becomes entangled in the rollers. One object of the invention is to avoid these problems.

According to one aspect of the present invention there is provided a bale wrapping machine comprising a wheeled base frame having a bale receiving cradle followed by a bale wrapping device and a roller bed sloping down to ground level, the bale receiving cradle comprising a support along which a bale can be translated into the bale wrapping device and a hydraulic ram device for translating the bale along the support, the bale wrapping device being located at a gap between the support and the roller bed and comprising a hoop arrangement through which bales can be translated by the hydraulic ram device, the hoop arrangement including a fixed hoop, a rotatable hoop coaxially with the fixed hoop, a reel for plastics strip carried by the rotary hoop and drive means for the rotary hoop characterised in that the support comprises a fixed plate or, alternatively, slide rails extending longitudinally of the machine and there is provided a moveable plate or, alternatively, slide rails extending longitudinally of the machine arranged temporarily to span the gap, and means for moving the moveable plate or slide rails into and out of the gap.

It has also been found that with lighter bales, eg of straw, there is a tendency for bales to run down the sloping roller bed during the initial loading period before the succession of wrapped bales has reached the ground and thus forms an anchor. Another object of the invention is to avoid this latter problem.

Accordingly, in the present invention the first group of rollers in the sloping roller bed has means for braking those rollers in unison.

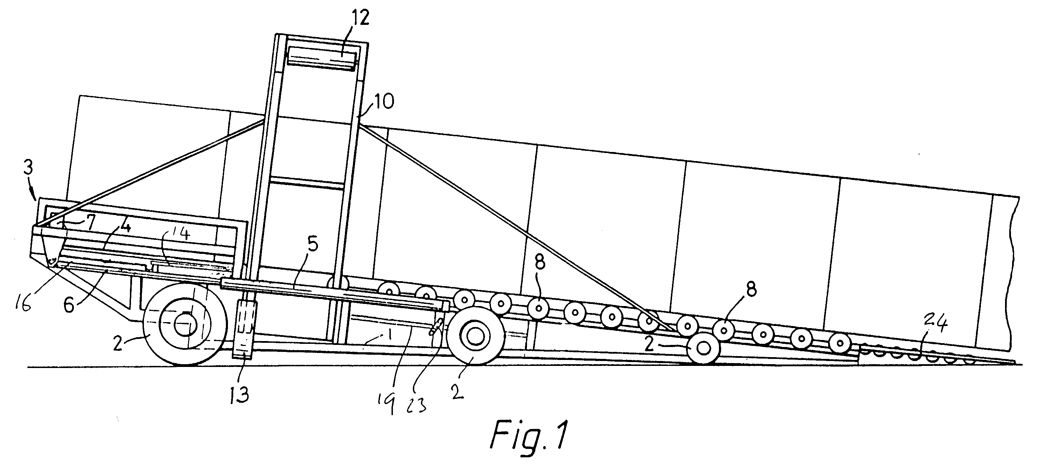

An embodiment of the invention will now be described, by way of example, with reference to the accompanying drawings, in which:-
- Fig 1: is a side view of a bale wrapping machine;
- Fig 2: is an isometric view showing a front portion of the machine but with some items omitted;
- Fig 3: is an isometric view showing hydraulics at the front portion of the machine; and
- Fig 4: is a front view showing a manual braking means for the initial rollers of a sloping roller bed.

In the drawings, a bale-wrapping machine comprises a base 1 having wheels 2. A bale-receiving cradle 3 is provided at the front end of the machine and this includes a fixed plate 4 which could be replaced by slide rails extending longitudinally of the machine. The cradle also includes a hydraulic ram device having two side-mounted cylinders 5, pistons having rods 6 and a cross bar 7 which moves over the plate 4.

The machine also includes a bale wrapping device located at a gap between the plate 4 and a bed of rollers 8 which slopes downwards and rearwards to ground level. The bale wrapping device comprises an inner fixed hoop (not shown) and an outer rotatable hoop 10 which carries wheels (not shown) which roll about the fixed hoop. The hoop 10 also carries a reel 12 of plastics strip and is driven by a friction wheel 13 which is itself driven by a hydraulic motor. The construction of the bale wrapping device is more closely described and illustrated in GB 2 192 172 A.

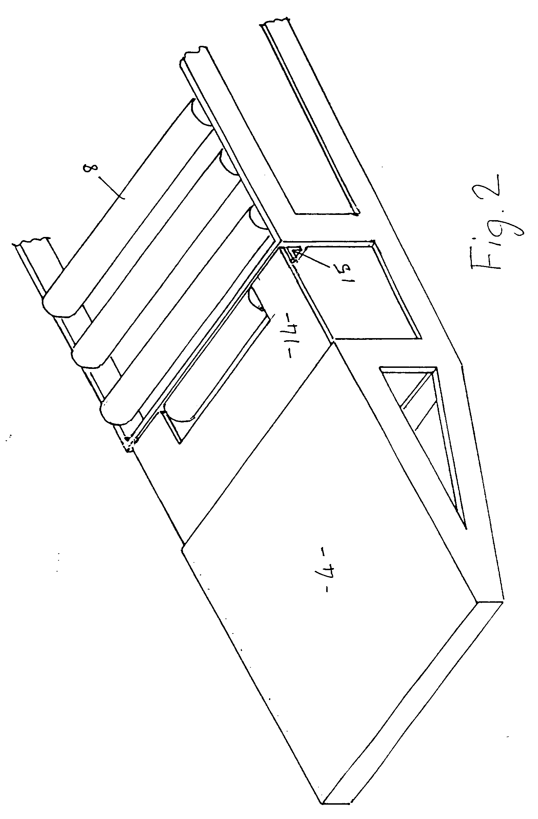

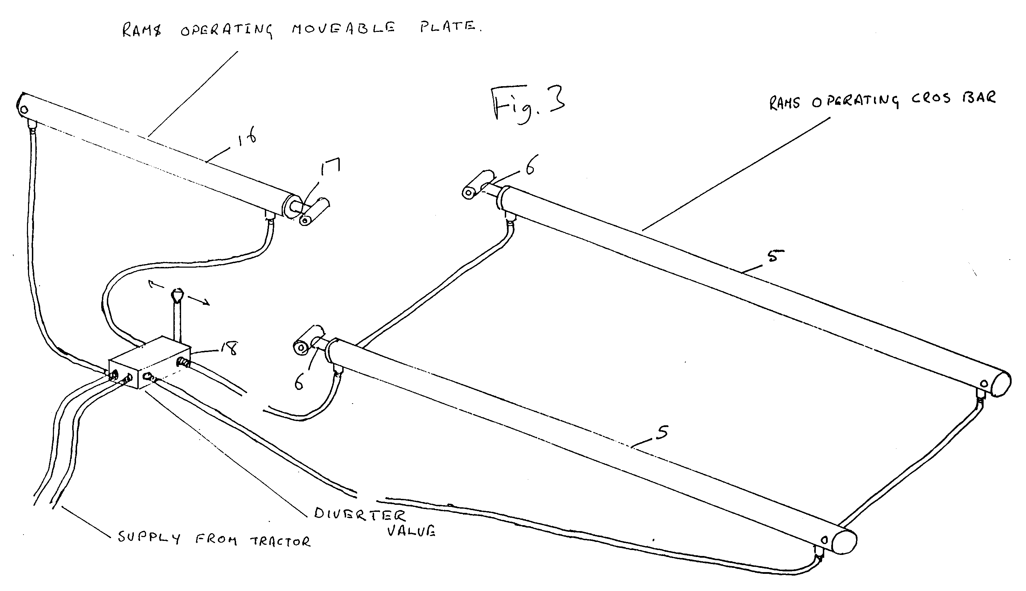

In Fig 2 the fixed plate 4 is shown together with a movable plate 14 slidably mounted under the plate 4 and movable between the position shown in Fig 2 where the plate 14 bridges the gap between the plate 4 and the bed of rollers 8 and a position completely under the plate 4 and leaving the gap clear. In the position shown in Fig 2 the free edge of the plate 14 is supported on brackets 15 on both sides of a shorter loading roller 8. The plate 14 is moveable by means of a hydraulic shown in Fig 3 ram device having a cylinder 16 mounted on the cradle 3, and a piston having a rod 17 connected to the plate 14. The ram cylinders 5 and 16 are connectable with the hydraulics of an accompanying tractor by means of a manually-operable diverter valve 18.

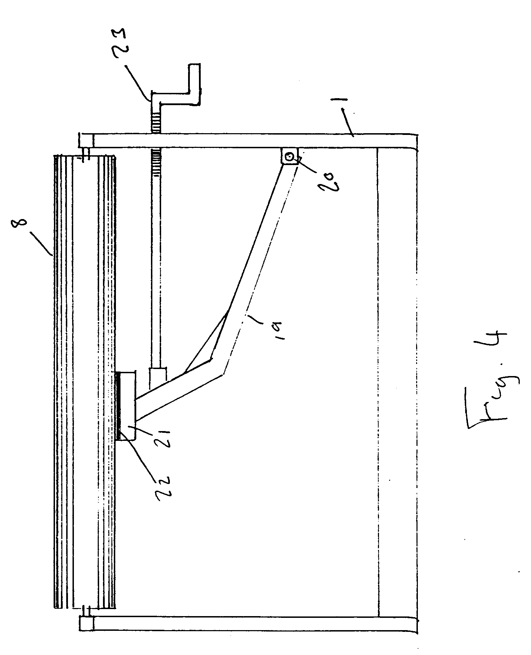

In Fig 4 there is shown a manually-operable braking means for leading rollers 8 of the sloping roller bed. The braking means includes a frame 19 hinged at 20 to the base 1. The frame 19 includes a beam 21 faced with a friction material 22 arranged to span and contact the leading group of rollers 8. A screw crank 23 is provided to apply the beam 21 to the rollers 8 and release the beam from the rollers.

In operation, large round bales are loaded one-by-one onto the cradle with the hydraulic ram device 5, 6 extended and the ram 16, 17 also extended so that the plate 14 bridges the gap between the plate 4 and the bed of rollers 8. The ram device 5, 6 is then retracted so that the bale is pushed into the hoop arrangement along the plates 4 and 14 until the bale bridges the gap between the plate 4 and the bed of rollers 8. The plate 14 is then retracted by operating the diverter valve 18 thus leaving space for the plastics strip for the reel to pass under the bale as the hoop 10 rotates. Once a succession of wrapped bales is established and extend rearwardly to the ground they serve as an anchor against which the ram device 5, 6 acts so that the machine is advanced along and ahead of a row or column of wrapped bales lying around on the ground .

In some situations it is beneficial to brake the progress of the initial bales down the sloping bed of rollers 8 before the leading bale reaches the ground and can act as an anchor. This can be down simply by turning the screw crank 23 to apply the bean 21 to the rollers 8 at a desired pressure. Of course, once the leading bale reaches the ground, the screw crank 23 can be operated to release the beam 21 from the rollers 8.

The machine may be transported to and from its place of operation by folding up a trailing bed of small rollers at the rear of the machine and fixing a removable drawbar at this point.

## Claims

1. A bale wrapping machine comprising a wheeled base frame (1) having a bale receiving cradle (3) followed by a bale wrapping device and a roller bed (8) sloping down to ground level, the bale receiving cradle comprising a support along which a bale can be translated into the bale wrapping device and a hydraulic ram device for translating the bale along the support, the bale wrapping device being located at a gap between the support and the roller bed and comprising a hoop arrangement through which bales can be translated by the hydraulic ram device, the hoop arrangement including a fixed hoop, a rotary hoop rotatable coaxially with the fixed hoop, a reel for plastics strip carried by the rotary hoop and drive means for the rotary hoop characterised in that the support comprises a fixed plate (4) or, alternatively, slide rails extending longitudinally of the machine and there is provided a moveable plate (14) or, alternatively, slide rails extending longitudinally of the machine arranged temporarily to span the gap, and means for moving the moveable plate or slide rails into and out of the gap.

2. A bale wrapping machine according to claim 1 wherein breaking means (19,21,23) are provided for the first group of rollers (8) in the sloping roller bed for breaking these rollers in unison.

3. A bale wrapping machine according to claim 1 or 2, wherein the means for moving the moveable plate (14) comprises a hydraulic device (16,17).

4. A bale wrapping machine according to claim 2, wherein the breaking means comprises a hinged frame (19) having a beam (21) arranged to span and contact the rollers (8) and control means (23) for applying the beam to and releasing the beam from the rollers.

5. A bale wrapping machine according to claim 4, wherein the control means for the beam comprises a screw crank (23).

## Patentansprüche

1. Ballenbindemaschine mit einem mit Rädern versehenen Fahrgestell (1), das eine Ballen aufnehmende Wiege (3) aufweist, an die sich eine Ballenschnüreinrichtung und ein Rollengang (8) anschließen, der auf das Erdbodenniveau schräg nach unten führt, wobei die den Ballen aufnehmende Wiege eine Auflage, längs derer ein Ballen in die Ballenverschnüreinrichtung überführt werden kann, und eine hydraulische Kolbenzylindereinrichtung aufweist, um den Ballen längs des Trägers zu üaberführen, und die Balleneinschnüreinrichtung an einer Lücke zwischen dem Träger und dem Rollengang angeordnet ist sowie eine Reifenanordnung umfaßt, durch die die Ballen mittels der hydraulischen Kolbenzylindereinrichtung hindurchzutransportieren sind, wobei die Reifenanordnung einen feststehenden Reifen, einen koaxial zu dem feststehenden Reifen drehbaren drehbaren Reifen, eine mittels des drehbaren Reifens gelagerte Spule für einen Kunststoffstreifen und Antriebsmittel für den drehbaren Reifen aufweist, dadurch gekennzeichnet, daß der Träger eine feststehende Platte (4) oder alternativ Gleitschienen aufweist, die sich in Längsrichtung der Maschine erstreckt bzw. erstrecken, daß eine bewegbare Platte (14) oder alternativ Führungsschienen vorgesehen sind, die sich in Längsrichtung der Maschine erstreckt bzw. erstrecken, daß die bewegbare Platte oder die bewegbaren Schienen derart gestaltet sind, daß sie zeitweise die Lücke überbrücken, und daß Mittel vorhanden sind, um die bewegbare Platte oder bewegbaren Gleitschienen in die Lücke oder aus dieser heraus zu bewegen.

2. Ballenbindemaschine nach Anspruch 1, bei der an der ersten Gruppe von Rollen (8) des nach unten führenden Rollengangs Bremsmittel (19, 21, 23) vorgesehen sind, um diese Rollen gleichzeitig zu bremsen.

3. Ballenbindemaschine nach Anspruch 1 oder 2, bei der die Mittel zum Bewegen der bewegbaren Platte (14) eine hydraulische Einrichtung 16, 17) umfassen.

4. Ballenbindemaschine nach Anspruch 2, bei der die Bremsmittel einen anscharnierten Rahmen (19) mit einem Balken (21) aufweisen, der so angeordnet ist, daß er sich über die Rollen (8) erstreckt und mit diesen in Berührung steht, und bei der Steuermittel (23) zum Anlegen des Balkens an die Rollen und zum Wegführen des Balkens von diesen vorgesehen sind.

5. Ballenbindemaschine nach Anspruch 4, bei der die Steuermittel für den Balken eine mit einem Gewinde versehene Kurbel (23) aufweisen.

## Revendications

1. Machine d'emballage de balles comprenant un support de base sur roues (1) ayant un berceau de réception de balles (3) suivi d'un dispositif d'emballage de balles et un lit à rouleaux (8) s'inclinant jusqu'au niveau du sol, le berceau de réception de balles comprenant un support le long duquel une balle peut être déplacée en translation dans le dispositif d'emballage de balles et un dispositif formant bélier hydraulique pour déplacer en translation la balle le long du support, le dispositif de cerclage de balles étant situé dans un intervalle entre le support et le lit à rouleaux et comprenant un agencement de cerclage par l'intermédiaire duquel les balles peuvent être déplacées en translation par le dispositif formant bélier hydraulique, l'agencement de cerclage comprenant un cerclage fixe, un cerclage rotatif tournant dans le sens coaxial avec le cerclage fixe, une bobine pour bande en plastique supportée par le cerclage rotatif ainsi que des moyens d'entraînement du cerclage rotatif, caractérisée en ce que le support comprend une plaque fixe (4) ou, en alternative, des glissières s'étendant suivant la direction longitudinale de la machine et une plaque mobile (14) ou, en alternative, des glissières s'étendant suivant la direction longitudinale de la machine disposées temporairement pour franchir l'intervalle, et des moyens pour déplacer la plaque mobile ou les glissières dans et hors de l'intervalle.

2. Machine d'emballage de balles selon la revendication 1, dans laquelle des moyens de freinage (19, 21, 23) sont prévus pour le premier groupe de rouleaux (8) dans le lit à rouleaux incliné pour freiner ces rouleaux en même temps.

3. Machine d'emballage de balles selon la revendication 1 ou 2 dans laquelle le moyen pour déplacer la plaque mobile (14) comprend un dispositif hydraulique (16, 17).

4. Machine d'emballage de balles selon la revendication 2, dans laquelle les moyens de freinage comprennent un cadre articulé (19) ayant une poutrelle (21) disposée de manière à traverser et à venir en contact avec les rouleaux (8) et des moyens de commande (23) pour appliquer la poutrelle sur les rouleaux et l'en dégager.

5. Machine d'emballage de balles selon la revendication 4 dans laquelle les moyens de commande pour la poutrelle comprennent une manivelle à vis (23).
